Europäisches Patentamt

European Patent Office

Office européen des brevets

(11) Veröffentlichungsnummer: **0 324 208 B1**

(19)

# EUROPÄISCHE PATENTSCHRIFT

(12)

(45) Veröffentlichungstag der Patentschrift:
23.10.91 Patentblatt 91/43

(51) Int. Cl.⁵ : **H04B 7/08**

(21) Anmeldenummer: **88202992.9**

(22) Anmeldetag : **10.12.88**

(54) **Verfahren und Schaltungsanordnungen zum Umschalten zwischen frequenzmodulierten Hochfrequenzsignalen.**

Verbunden mit 89900597.9/0393122
(europäische
Anmeldenummer/Veröffentlichungsnummer)
durch Entscheidung vom 13.03.91.

(30) Priorität : 21.12.87 DE 3743362

(43) Veröffentlichungstag der Anmeldung :
19.07.89 Patentblatt 89/29

(45) Bekanntmachung des Hinweises auf die
Patenterteilung :
23.10.91 Patentblatt 91/43

(84) Benannte Vertragsstaaten :
AT BE CH DE ES FR GB IT LI LU NL SE

(56) Entgegenhaltungen :
DE-A- 3 107 970
DE-A- 3 324 959
GB-A- 2 006 578

(56) Entgegenhaltungen :
US-A- 4 189 733
US-A- 4 373 207
PATENT ABSTRACTS OF JAPAN, Band 9, Nr.
263 (E-351)[1986], 19. Oktober 1985; & JP-A-60
109 934

(73) Patentinhaber : Richard Hirschmann GmbH &
Co.
Richard-Hirschmann-Strasse 19 Postfach 110
W-7300 Esslingen a.N. (DE)

(72) Erfinder : Buck, Walter Dr.
Steinwaldstrasse 90
W-7000 Stuttgart 70 (DE)
Erfinder : Schenkyr, Dieter
Lessingstrasse 30
W-7312 Kirchheim (DE)

(74) Vertreter : Geyer, Ulrich F. et al
Wagner & Geyer Patentanwälte
Gewürzmühlstrasse 5
W-8000 München 22 (DE)

EP 0 324 208 B1

## Beschreibung

Die Erfindung betrifft Verfahren und Schaltungsanordnungen zum Umschalten zwischen frequenzmodulierten Hochfrequenzsignalen.

Die Umschaltung zwischen frequenzmodulierten Hochfrequenzsignalen ist beispielsweise bei Empfangs-Antennensystemen mit mehreren einzelnen Empfangsantennen erforderlich. Empfangs-Antennensysteme dieser Art mit Umschaltung zwischen frequenzmodulierten Hochfrequenzsignalen sind beispielsweise aus "Funkschau" 1986, Heft 24, Seiten 43 bis 46 bekannt und in den DE-A1-3836046, veröffentlicht aus 11 Mai 1989, und der DE-B1-3736969, veröffentlicht aus 29 Juin 1989, derselben Anmelderin beschrieben. Bei den auch unter der Bezeichnung Diversity-Anlagen bekannten Systemen wird je nach der Qualität der von den einzelnen Antennen empfangenen Signalen zwischen den einzelnen Signalen ständig umgeschaltet, um Empfangsstörungen, die auf die Mehrwegeausbreitung der Signale zurückzuführen sind, in bekannter Weise zu verringern. Ein Weiteres Beispiel, bei dem die Umschaltung zwischen frequenzmodulierten Hochfrequenzsignalen auftritt, sind phasengesteuerte Empfangs-Antennenanlagen, sogenannte Phased-Array-Systeme, wie sie beispielsweise aus "Antennentechnik", Hock, Pauli et al, Expert-Verlag 1982, z.B. Seiten 82 ff., bekannt sind.

Bei Umschaltung zwischen amplitudenmodulierten Signalen treten Umschalt-Störsignale hauptsächlich durch die damit verbundenen Amplituden- oder Pegelsprünge auf. Bei frequenzmodulierten Systemen entstehen Störsignale insbesondere durch die bei der Signalumschaltung auftretenden Phasensprünge. Derartige Störsignale führen zu Knackgeräuschen, die im Falle von Tonrundfunk-Empfangssystemen insbesondere dann zu einer erheblichen Beeinträchtigung des Hörgenusses führen, wenn diese häufig auftreten, was bei den zuvor als Beispiel genannten Diversity- und phasengesteuerten Antennensystemen der Fall ist, da das Umschalten bei starker Mehrwegestörung, z.B. in Städten, sehr häufig auftritt.

Derartige Störungen durch die Verwendung von geeigneten Filtern oder Begrenzern zu verringern, ist jedoch praktisch nicht möglich, da diese Störungen im Nutzsignalbereich des frequenzmodulierten Signals liegen. Das hörbare Knackgeräusch im Lautsprecher ist dadurch nicht zu unterbinden.

Aus der DE-A13324959 ist eine Empfangsschaltung für ein Diversity-Verfahren bekannt, bei dem eingehende HF-Signale über einem Umschalter entsprechend bestimmter Kriterien umgeschaltet werden. Dabei wird eine überlappende Umschaltung oder auch eine Überblendung, also eine "weiche" Umschaltung angestrebt — dies im Hinblick darauf, daß dadurch Einschwingvorgänge durch Hochfrequenz-Pegelsprünge unterdrückt werden können.

Aus "Patent Abstracts of Japan", Band 9, Nr. 263, Oktober 19, 1985 ist eine Antennenumschaltung bekannt, bei der das demodulierte Signal, d.h. das NF-Signal, amplitudenmäßig abgesenkt wird. Bei dieser bekannten Schaltungsanordnung handelt es sich also um eine normale Störaustastung. Dabei ist der Phasensprung durch die Bandbreite des in der Empfängerschaltung vorgesehenen Filters gegeben. Es erfolgt ein zeitliches "Verschmieren" des Impulses, der dadurch auf die Einschwingzeit des Filters aufgeweitet wird. Die Signalstörung, die durch den Phasenspruch erfolgt, liegt also innerhalb der Signalparameter und kann davon nicht durch Amplitudenbegrenzung getrennt werden.

Störungen im Nutzsignalbereich des frequenzmodulierten Signals liegen. Das hörbare Knackgeräusch im Lautsprecher ist dadurch nicht zu unterbinden.

Der Erfindung liegt daher die Aufgabe zugrunde, Verfahren und Schaltungsanordnungen anzugeben bzw. zu schaffen, mit denen Störungen, die bei der Umschaltung zwischen frequenzmodulierten Signalen auftreten, unterdrückt und insbesondere die sich dadurch ergebenden Knackgeräusche beim UKW-Rundfunkempfang eliminiert werden.

Ausgehend von einem Verfahren zum Umschalten zwischen mindestens zwei frequenzmodulierten Hochfrequenzsignalen wird diese Aufgabe dadurch gelöst, daß das zu Schaltende Hochfrequenzsignal während des Umschaltens in seiner Amplitude abgesenkt wird.

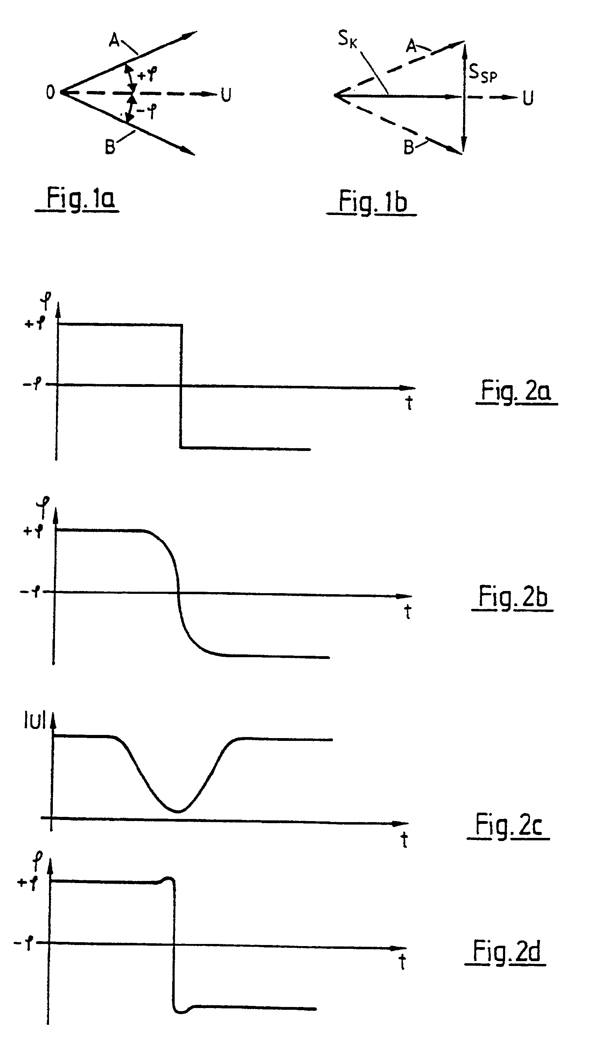

In Fig. 1a ist der Phasensprung eines Hochfrequenzsignals aus der Phasenlage $+ \varphi$ in die Phasenlage $- \varphi$, d.h. aus der Zeigerstellung A in die Zeigerstellung B in einem Vektordiagramm schematisch dargestellt. Wie Fig. 1b zeigt, kann der Ausgangszeiger A auch als Summe eines konstanten Signalvektors $S_K$ und eines Sprungsignalvektors $S_{SP}$ dargestellt werden. Ein Phasensprung kann dann dadurch beschrieben werden, daß der Sprungsignalvektor $S_{SP}$ um 180° springt, der Konstantsignalvektor $S_K$ sich jedoch nicht ändert.

Der Konstantsignalvektor $S_K$ und der Sprungsignalvektor $S_{SP}$ stehen jeweils senkrecht aufeinander und sind daher für die weitere Betrachtung als voneinander unabhängig anzusehen. Insbesondere kann das Übertragungsverhalten der durch die beiden Vektoren dargestellten Signale in frequenzabhängigen Schaltungsanordnungen, wie Filtern usw., getrennt voneinander betrachtet werden. Das dem Konstant-Signalvektor $S_K$ entsprechende konstante Signal wird beispielsweise innerhalb des Durchlaßbereichs eines Filters unverändert übertragen. Dies ist jedoch für das dem Sprungsignalvektor $S_{SP}$ entsprechende Sprungsignal nicht der Fall.

Das Sprungsignal $S_{SP}$ enthält ein Spektrum von Oberwellen, wobei das Filter die Zahl der Oberwellen des Sprungsignals $S_{SP}$ am Ausgang begrenzt. Das bedeutet, daß die Flanken des Sprungsignals flacher werden. In Fig. 2a ist der ideale Phasenverlauf des Sprungsignals $S_{SP}$ von Phasenlage $+ \varphi$ nach $- \varphi$ dargestellt, während in Fig. 2b das Sprungsignal $S_{SP}$ dargestellt ist, nachdem es frequenzabhängige Schaltungsanordnungen, beispielsweise ein Filter, durchlaufen hat. Das frequenzabhängige System hat die Flankensteilheit des Sprungsignals $S_{SP}$ verringert.

Für nicht allzu große Winkel entspricht der Phasenverlauf $\varphi(t)$ dem Kurvenverlauf des Sprungsignals $S_{SP}$, d.h. es gilt

$$\varphi(t) = \arctan \frac{S_{SP}(t)}{S_K} \quad (1)$$

Für kleine Winkel ist angenähert

$$\varphi(t) = \frac{S_{SP}(t)}{S_K} \quad (2)$$

In einem Tonrundfunkdemodulator für frequenzmodulierte Signale wird dieses Signal differenziert, und es ergibt sich das Demodulatorausgangssignal

$$U(t) \sim f(t) = \frac{d\varphi}{dt} \quad (3)$$

Wie der Beziehung (3) zu entnehmen ist, ist die Ausgangsspannung u(t) und damit die ihr entsprechende Frequenz f(t) proportional der Steigung des Spungssignals $S_{SP}$ (t). Dieser Verlauf wird durch einen bandbegrenzten Dirac-Stoß beschrieben.

Dieses durch den Phasensprung entstehende Störsignal, das aufgrund einer relativ großen Amplitude ein hörbares Knacken im Lautsprecher verursacht, liegt, wie bereit erwähnt wurde, weitgehend im Nutzsignalbereich, so daß es durch Filterung und Begrenzung nicht entfernt werden kann.

Gemäß der erfinderischen Maßnahme wird das durch den Phasensprung bei Signalumschaltung entstehende Störsignal dadurch eliminiert bzw. verkleinert, daß der Pegel des Gesamtsignals während des Umschaltvorgangs abgesenkt wird. Diese Pegelverringerung entspricht einer zusätzlichen Modulation des durch den Konstantsignalvektor $S_K$ in Fig. 1b dargestellten ursprünglich konstanten Signalanteils. Die Hüllkurve des HF-Signals nach Absenken des Gesamtsignalpegels ist in Fig. 2c dargestellt. Die Flankensteilheit im abgesenkten Signal ist durch die Bandbegrenzung ebenfalls begrenzt. Wegen der Beziehung (2) ergibt sich auf Grund dieser Amplitudenabsenkung nunmehr ein wesentlich steilerer Phasenverlauf, wie er in Fig. 2d dargestellt ist. Da — wie gesagt — die Ausgangsspannung u(t), die der Frequenz f(t) entspricht, gemäß der Beziehung (3) proportional der Steigung des Phasenverlaufs des abgesenkten Signals ist, ergibt sich wegen des in Fig. 2d dargestellten steileren Sprunges aufgrund der Pegelabsenkung des Gesamtsignals eine relativ hohe Ausgangsspannung von kürzerer Dauer, als wenn das Gesamtsignal während des Umschaltvorgangs in seiner Amplitude nicht abgesenkt worden wäre. Dies bedeutet aber, daß wesentliche Spektralkomponenten des Störsignals außerhalb des Nutzsignalbereichs liegen, die durch Begrenzung der Amplitude und durch Filterung eliminiert und damit in ihrer Wirkung erheblich abgeschwächt werden können.

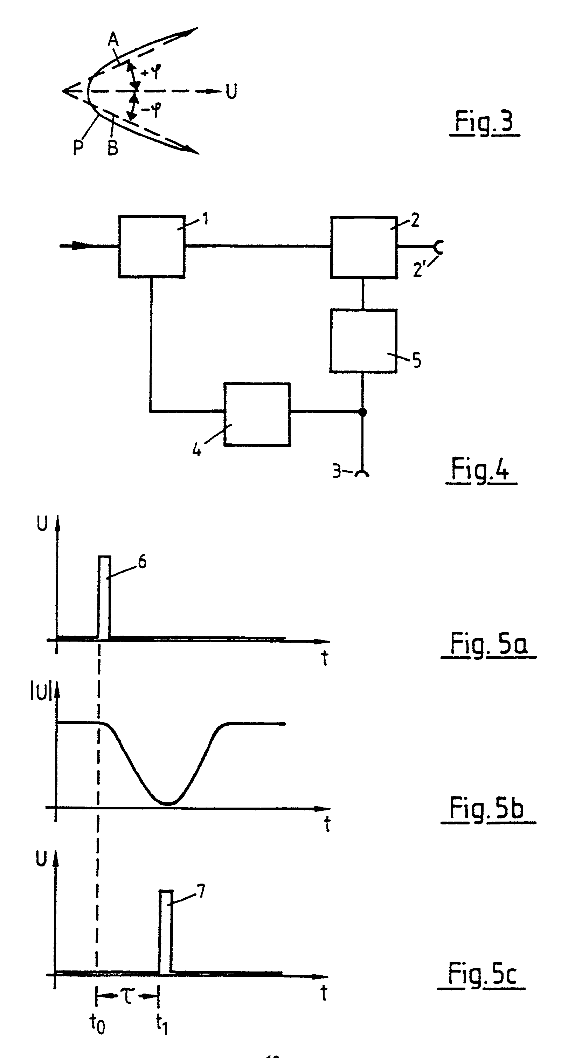

Fig. 3 zeigt die Ortskurve des zeitabhängigen Signalvektors während des Phasensprungs bei Anwendung der erfindungsgemäßen Maßnahme, nämlich das Hochfrequenzsignal während der Umschaltung amplitudenmäßig abzusenken. Im Gegensatz zu dem in Fig. 1a dargestellten Vektordiagramm ist die Ortskurve des zeitabhängigen Signalvektors keine Gerade mehr, sondern eine mit ihrem Scheitel zum Nullpunkt hin gerichtete Parabel P. Wie aus Fig. 3 ersichtlich, ändert sich die Phase des Hochfrequenzsignals während des Sprungvorgangs im zeitlichen Verlauf zunächst nur wenig, um dann in der Nähe des Nulldurchgangs bzw. des Nullpunkts eine sehr hohe Änderungsgeschwindigkeit anzunehmen. Die vektormäßge Darstellung in Fig. 3 macht nochmals die Wirkungsweise des erfindungsgemäßen Verfahrens deutlich.

Gemäß einer weiteren vorteilhaften Ausführungsform der Erfindung wird das umgeschaltete demodulierte Sprungsignal amplitudenbegrenzt. Dadurch werden wesentliche Komponenten des Störsignals, die außerhalb des Nutzsignalbereichs liegen, abgeschnitten und das Störsignal abgeschwächt, so daß für den Hörer kein Knackgeräusch auftritt oder das Knackgeräusch so gering ist, daß es den Hörgenuß nicht mehr stört. Wegen des teilweise der Spannungsrichtung entgegengerichteten Phasenverlaufs des umgeschalteten Hochfrequenzsignals ist durch geeignete Dimensionierung des Amplitudenbegrenzers für bestimmte Phasensprünge im zeitlichen Mittel eine vollständige Kompensation der Reststörung erreichbar.

Der Modulator verarbeitet die Sprungsignale wegen seiner begrenzten Aussteuerbarkeit nicht mehr linear, er führt also automatisch die Amplitudenbegrenzung durch.

Gemäß einer weiteren Ausführungsform der Erfindung ist es vorteilhaft, wenn die Amplitude in Abhängigkeit von der momentanen Amplitude des demodulierten Signals begrenzt wird. Auf diese Weise ist auch bei leisen, eine geringe Amplitude aufweisenden Signalen gewährleistet, daß die Knackgeräusche auch in diesen Fällen sicher unterdrückt werden, da durch die Abhängigkeit von der Momentanamplitude des demodulierten Signals eine Amplitudenbegrenzung früher einsetzt.

Gemäß einer weiteren vorteilhaften Ausgestaltung der Erfindung wird das umgeschaltete Signal gefiltert. Dadurch ist es möglich, weitere bzw. andere, außerhalb des Nutzsignalbereichs liegende Komponenten des Störsignals zu unterbinden. Der Filtervorgang kann zusätzlich zur Amplitudenbegrenzung vorgenommen werden.

Das Verfahren ist besonders vorteilhaft anwendbar, wenn das frequenzmodulierte Hochfrequenzsignal ein UKW-Signal ist und zwischen den Einzelantennen eines Antennen-Empfangssystems mit mehreren Empfangsantennen umgeschaltet wird. Bei diesen sogenannten Antennen-Diversity-Systemen kann je nach den gegebenen Bedingungen eine sehr häufige Phasenumschaltung erfolgen. Die dabei entstehenden Umschalt-Störsignale werden durch die Erfindung unterdrückt bzw. derart abgesenkt, daß insbesondere auch bei häufigem Umschalten die Signalqualität nicht leidet und ein ungestörter Hörgenuß ohne Knackgeräusche möglich ist. Gerade bei herkömmlichen Diversity-Systemen wurden teilweise aufwendige Maßnahmen ergriffen, um zu gewährleisten, daß Umschaltungen nicht zu häufig auftreten, damit Knackgeräusche den Empfang nicht beeinträchtigen. Dadurch konnten andererseits die Vorteile der Diversity-Verfahren nicht voll ausgenutzt werden. Unter Verwendung der erfindungsgemäßen Maßnahme ist es nunmehr möglich, Diversity-Schaltungen unabhängig von der Frequenz der Signalumschaltungen aufzubauen und zu dimensionieren, ohne daß Beeinträchtigungen hinsichtlich der durch Umschalt-Störsignale auftretenden Knackgeräusche, die auch durch sehr schnelles Umschalten alleine nicht zu beseitigen sind, in Kauf genommen werden müßten.

Die genannten Vorteil der erfindungsgemäßen Maßnahme sind insbesondere auch dann zu erzielen, wenn das Empfangssystem phasengesteuert ist.

Eine besonders vorteilhafte Ausführungsform der Erfindung ist gegeben, wenn dem Hochfrequenzsignal oder einem ZF-Signal im Bereich der tiefsten Amplitudenabsenkung ein Rauschsignal zugefügt wird. Ohne Zufügung eines Rauschsignals stehen die oder zumindest eine Vielzahl von Spektrallinien in einer festen Phasenbeziehung zueinander, d.h., das Knackgeräusch ist kohärent und daher als hartes Knacken zu hören. Durch Überlagern eines Rauschsignals insbesondere im Bereich der tiefsten Amplitudenabsenkung werden die festen Phasenbeziehungen aufgelöst, so daß der Geräuscheindruck des Knackgeräusches verwischt und deshalb weniger als Störung empfunden wird.

Eine weitere Ausführungsform der Erfindung besteht darin, daß die Amplitude auf einen Amplitudenwert von etwa Null abgesenkt wird. Die vollständige Absenkung der Amplitude, d.h. praktisch die kurzzeitige Abschaltung des Signals ist insbesondere dann vorteilhaft, wenn ein Empfänger eine sehr gute Begrenzerwirkung hat, das Signal also bereits vor der Demodulation in einem Empfänger begrenzt wird. Auch in diesem Falle wird durch die genannte zusätzliche Maßnahme das Knacken sicher unterdrückt.

Eine Schaltungsanordnung zur Durchführung der erfindungsgemäßen Verfahren und zur Lösung der gestellten Aufgabe weist eine dem Hochfrequenzsignal eine Phasenänderung aufprägende Schaltungsstufe sowie eine dieser Schaltungsstufe nachgeschalteten, die Amplitude des zu erhaltenden Hochfrequenzsignals absenkende Schaltungsstufe auf, wobei letztere der ersteren nachgeschaltet ist. Vorzugsweise ist die dem Hochfrequenzsignal eine Phasenänderung aufprägende Schaltungsstufe ein Phasendrehglied, wie es beispielsweise in der genannten DE-DE-A1-3836046 in Zusammenhang mit einem Diversity-Empfangsverfahren beschrieben ist. Die die Amplitude des Hochfrequenzsignals absenkende Schaltungsstufe ist vorteilhafterweise ein Amplitudenmodulator.

Vorteilhaft ist es weiterhin, die dem Hochfrequenzsignal eine Phasenänderung aufprägende Schaltungsstufe und/oder die die Amplitude des Hochfrequenzsignals absenkende Schaltungsstufe mit einem Steuersignal, etwa einem Triggerimpuls zu aktivieren. Dieser Triggerimpuls kann beispielsweise immer dann bereitgestellt werden, wenn bei einem Diversity-System von einer Antenne auf eine andere Antenne umgeschaltet wird, wie dies z.B. ebenfalls in der genannten DE-A1-3836046 im einzelnen aufgeführt ist und auf die in diesem Zusammenhang Bezug genommen wird.

Vorteilhafterweise ist eine Verzögerungsschaltung vorgesehen, die das Steuersignal für die dem Hochfrequenzsignal eine Phasenänderung aufprägende Schaltungsstufe gegenüber dem Steuersignal für die die Amplitude des Hochfrequenzsignals absenkende Schaltungsstufe verzögert. Vorzugsweise ist die Verzögerungszeit $\tau$ so gewählt, daß die Ansteuerung der dem Hochfrequenzsignal die Phasenänderung aufprägenden Schaltungsstufe dann geschieht, wenn die die Amplitude absenkende Schaltungsstufe dem Hochfrequenzsignal die während des Absenkvorgangs kleinste Amplitude erzeugt. Auf diese Weise wird sichergestellt, daß die Phasendrehung oder -umschaltung nicht bereits auf der Amplitudenabsenkflanke des Hochfrequenzsignals auftritt, was zu einer geringeren Wirkung der Knackgeräuschunterdrückung führen würde.

Eine weitere vorteilhafte Ausgestaltung der erfindungsgemäßen Schaltungsanordnung besteht darin, daß der die Amplitude des Hochfrequenzsignals absenkenden Schaltungsstufe eine Impulsformerstufe für das Steuersignal vorgeschaltet ist, die dem Steuersignal eine optimale Impulsform gibt.

Die Erfindung wird nachstehend anhand eines Ausführungsbeispiels unter Bezug auf die Figuren näher erläutert. Es zeigen :

| Fig. 1a | ein Diagramm für die Ortskurve des Signalvektors bei einer einen Phasensprung aufweisenden Signalumschaltung herkömmlicher Art, |
| Fig. 1b | die schematische Zerlegung des Signalvektors in orthogonale Signale, |
| Fig. 2a bis 2d | Signalpläne zur Erläuterung der Erfindung, |
| Fig. 3 | eine Ortskurve des Signalvektors unter Verwendung der vorliegenden Erfindung, |
| Fig. 4 | ein Ausführungsbeispiel für eine Schaltungsanordnung gemäß der vorliegenden Erfindung und |
| Fig. 5a bis 5c | Signalpläne zur Erläuterung der in Fig. 4 dargestellten Schaltungsanordnung. |

Wie in Fig. 4 dargestellt ist, wird einem Phasendrehglied 1 ein beispielsweise von einer Antenne kommendes Hochfrequenzsignal zugeführt, das nach der Phasendrehung zu einem Amplitudenmodulator 2 gelangt. Das Hochfrequenz-Ausgangssignal des Amplitudenmodulators 2 wird am Anschluß 2' einer Auswerteschaltung, beispielsweise einer Tonrundfunk-Empfangsschaltung, zugeleitet. Über eine Klemme 3 wird dem Amplitudenmodulator 2 ein Steuersignal, beispielsweise in Form eines Steuerimpulses, zur Aktivierung zugeführt, das nach Verzögerung in einem Verzögerungsglied 4 auch dem Phasendrehglied 1 bereitgestellt wird. Das Phasendrehglied 1 ist ein Beispiel für eine dem Hochfrequenzsignal eine Phasenänderung aufprägende Schaltungsstufe, also einer Stufe, die einen Phasensprung bewirkt. Derartige Stufen sind, wie eingangs bereits ausgeführt, im Zusammenhang mit Antennen-Diversity-Systemen vorgesehen. Ein Beispiel hierfür ist in der bereits erwähnten DE-A1-3836046 derselben Anmelderin beschrieben.

Alternativ ist es möglich, zwischen der Klemme für das Steuersignal und dem Amplitudenmodulator 2 einen Impulsformer 5 vorzusehen, um dem den Amplitudenmodulator 2 ansteuernden Signal eine optimale Impulsform zu geben.

Amplitudenmodulatoren sind dem Fachmann allgemein bekannt und nicht Gegenstand der vorliegenden Erfindung, so daß auf deren Beschreibung hier verzichtet werden kann. Beispielsweise lassen sich Amplitudenmodulatoren mit PIN-Dioden einsetzen.

Das dargestellte Ausführungsbeispiel wird nachfolgend anhand der Signalpläne 5a bis 5c erläutert.

Zum Zeitpunkt $t_0$ (vgl. Fig. 5a) tritt an der Klemme 3 eine Steuerimpuls 6 auf, das über den Impulsformer 5 an den Amplitudenmodulator 2 gelangt und bewirkt, daß das Hochfrequenzsignal in seiner Amplitude abgesenkt wird, wie dies aus Fig. 5b ersichtlich ist. Würde das Steuersignal 6 ohne Verzögerung dem Phasendrehglied 1 zugeleitet, würde die Phasendrehung bzw. der Phasensprung durch das Phasendrehglied 1 ebenfalls zum Zeitpunkt $t_0$ ausgelöst. D.h., die Phasendrehung würde zu einem Zeitpunkt stattfinden, an dem die Amplitudenabsenkung des Hochfrequenzsignals noch nicht oder kaum erfolgt ist. Die Wirkung zur Unterdrückung der Knackgeräusche wäre daher gering. Aus diesem Grunde ist das Verzögerungsglied 4 vorgesehen, das die Ansteuerung des Phasendrehglieds 1 gegenüber der Ansteuerung des Amplitudenmodulators 2 um eine Verzögerungszeit $\tau$ bis zu einem Zeitpunkt $t_1$ hinauszögert — Steuersignal 7 —, an dem der Amplitudenmodulator 2 das Hochfrequenzsignal auf seinen kleinsten Amplitudenwert abgesenkt hat. Die Phasendrehung bzw. der Phasensprung erfolgt dadurch zum Zeitpunkt der kleinsten Amplitude des Hochfrequenzsignals, so daß eine optimale Knackgeräuschunterdrückung gewährleistet ist.

Die Erfindung wurde anhand eines Ausführungsbeispiels in Zusammenhang mit einem Phasendrehglied 1 beschrieben, wie es beispielsweise bei Antennen-Diversity-Systemen verwendet wird. Die Erfindung ist jedoch nicht auf diese Anwendung beschränkt, sondern überall dort einsetzbar, wo Phasenänderungen oder -sprünge bei Hochfrequenzsignalen und daraus sich ergebende Störungen auftreten.

**Patentansprüche**

1. Verfahren zum Umschalten zwischen mindestens zwei frequenzmodulierten Hochfrequenzsignalen, dadurch gekennzeichnet, daß das zu schaltende Hochfrequenzsignal während des Umschaltens in seiner Amplitude abgesenkt wird.

2. Verfahren nach Anspruch 1, dadurch gekennzeichnet, daß das umgeschaltete demodulierte Signal amplitudenbegrenzt wird.

3. Verfahren nach Anspruch 2, dadurch gekennzeichnet, daß die Amplitude in Abhängigkeit von der momentanen Amplitude des demodulierten Signals begrenzt wird.

4. Verfahren nach einem der Ansprüche 1 bis 3, dadurch gekennzeichnet, daß das umgeschaltete Signal gefiltert wird.

5. Verfahren nach einem der Ansprüche 1 bis 4, dadurch gekennzeichnet, daß das frequenzmodulierte Hochfrequenzsignal ein UKW-Empfangssignal ist, und daß zwischen den Einzelantennen eines Antennenempfangssystems mit mehreren Empfangsantennen umgeschaltet wird.

6. Verfahren nach Anspruch 5, dadurch gekennzeichnet, daß das Antennenempfangssystem ein Antennen-Diversity-System ist.

7. Verfahren nach Anspruch 5, dadurch gekennzeichnet, daß das Antennenempfangssystem ein phasengesteuertes System ist.

8. Verfahren nach einem der Ansprüche 1 bis 7, dadurch gekennzeichnet, daß dem Hochfrequenzsignal im Bereich der tiefsten Amplitudenabsenkung ein Rauschsignal zugefügt wird.

9. Verfahren nach einem der Ansprüche 1 bis 8, dadurch gekennzeichnet, daß die Amplitude auf etwa Null abgesenkt wird.

10. Schaltungsanordnung zur Durchführung des Verfahrens zum Umschalten zwischen mindestens zwei frequenzmodulierten Hochfrequenzsignalen nach wenigstens einem der Ansprüche 1 bis 9, gekennzeichnet durch eine dem Hochfrequenzsignal eine Phasenänderung aufprägende Schaltungsstufe (1) und eine dieser Schaltungsstufe (1) nachgeschalteten, die Amplitude des zu erhaltenden Hochfrequenzsignals absenkenden Schaltungsstufe (2).

11. Schaltungsanordnung nach Anspruch 10, dadurch gekennzeichnet, daß die dem Hochfrequenzsignal eine Phasenänderung aufprägende Schaltungsstufe (1) und/oder die die Amplitude des Hochfrequenzsignals absenkende Schaltungsstufe (2) durch ein Steuersignal (6) aktiviert wird bzw. werden.

12. Schaltungsanordnung nach Anspruch 11, dadurch gekennzeichnet, daß eine Verzögerungsschaltung (4) vorgesehen ist, die das Steuersignal (7), das der dem Hochfrequenzsignal eine Phasenänderung aufprägenden Schaltungsstufe (1) zugeführt wird, gegenüber dem Steuersignal (6), das der die Amplitude des Hochfrequenzsignals absenkenden Schaltungsstufe (2) zugeführt wird, um einen Zeitraum τ verzögert.

13. Schaltungsanordnung nach einem der Ansprüche 10 bis 12, dadurch gekennzeichnet, daß die dem Hochfrequenzsignal eine Phasenänderung aufprägende Schaltungsstufe (2) ein Phasendrehglied ist.

14. Schaltungsanordnung nach einem der Ansprüche 10 bis 13, dadurch gekennzeichnet, daß die die Amplitude des Hochfrequenzsignals absenkende Schaltungsstufe (2) ein Amplitudenmodulator ist.

15. Schaltungsanordnung nach einem der Ansprüche 10 bis 14, dadurch gekennzeichnet, daß der die Amplitude des Hochfrequenzsignals absenkenden Schaltungsstufe (2) eine Impulsformerstufe (5) für das Steuersignal (6) vorgeschaltet ist.

## Claims

1. Method for changeover between at least two frequency-modulated high-frequency signals, characterized in that the high-frequency signal with which the changeover is to be performed is lowered in its amplitude during the changeover.

2. Method according to claim 1, characterized in that the changed-over demodulated signal is limited in amplitude.

3. Method according to claim 2, characterized in that the amplitude is limited in dependence upon the instantaneous amplitude of the demodulated signal.

4. Method according to any one of claims 1 to 3, characterized in that the switched-over signal is filtered.

5. Method according to any one of claims 1 to 4, characterized in that the frequency-modulated high-frequency signal is a VHF reception signal and the switching is between the individual antennas of an antenna receiving system having a plurality of receiving antennas.

6. Method according to claim 5, characterized in that the antenna receiving system is an antenna diversity system.

7. Method according to claim 5, characterized in that the antenna receiving system is a phase-controlled system.

8. Method according to any one of claims 1 to 7, characterized in that a noise signal is applied to the high-frequency signal in the region of the lowest amplitude reduction.

9. Method according to any one of claims 1 to 8, characterized in that the amplitude is reduced to approximately zero.

10. Circuit arrangement for carrying out the method for changeover between at least two frequency-modulated high-frequency signals according to at least one of claims 1 to 9, characterized by a circuit stage (1) impressing a phase change on the high-frequency signal and a circuit stage (2) following said circuit stage (1) and reducing the amplitude of the high-frequency signal.

11. Circuit arrangement according to claim 10, characterized in that the circuit stage (1) impressing a phase change on the high-frequency signal and/or the circuit stage (2) lowering the amplitude of the high-frequency signal is or are activated by a control signal (6).

12. Circuit arrangement according to claim 11, characterized in that a delay circuit (4) is provided which delays by a time the control signal (7) which is supplied to the circuit stage (1) impressing a phase change on the high-frequency signal with respect to the control signal (6) which is supplied to the circuit stage (2) reducing the amplitude of the high-frequency signal.

13. Circuit arrangement according to any one of claims 10 to 12, characterized in that the circuit stage (2) impressing a phase change on the high-frequency signal is a phase rotation member.

14. Circuit arrangement according to any one of claims 10 to 13, characterized in that the circuit stage (2) lowering the amplitude of the high-frequency signal is an amplitude modulator.

15. Circuit arrangement according to any one of claims 10 to 14, characterized in that the circuit stage (2) lowering the amplitude of the high-frequency signal is preceded by a pulse shaper stage (5) for the control signal (6).

## Revendications

1. Procédé de commutation entre au moins deux signaux à haute fréquence modulés en fréquence, caractérisé en ce que l'amplitude du signal à haute fréquence à commuter est abaissée pendant la commutation.

2. Procédé selon la revendication 1, caractérisé en ce que le signal démodulé commuté est limité en amplitude.

3. Procédé selon la revendication 2, caractérisé en ce que l'amplitude est limitée en fonction de l'amplitude instantanée du signal démodulé.

4. Procédé selon l'une des revendications 1 à 3, caractérisé en ce que le signal commuté est filtré.

5. Procédé selon l'une des revendications 1 à 4, caractérisé en ce que le signal à haute fréquence modulé en fréquence est un signal de réception à ondes ultra courtes et en ce qu'il est commuté entre les antennes individuelles d'un système de réception à antennes comportant plusieurs antennes de réception.

6. Procédé selon la revendication 5, caractérisé en ce que le système de réception à antennes est un système à antennes Diversity.

7. Procédé selon la revendication 5, caractérisé en ce que le système de réception à antennes est un système commandé en phase.

8. Procédé selon l'une des revendications 1 à 7, caractérisé en ce qu'un signal de bruit est ajouté au signal à haute fréquence dans la gamme d'abaissement d'amplitude le plus bas.

9. Procédé selon l'une des revendications 1 à 8, caractérisé en ce que l'amplitude est abaissée à peu près jusqu'à zéro.

10. Circuit pour la mise en oeuvre du procédé de commutation entre au moins deux signaux à haute fréquence modulés en fréquence selon l'une au moins des revendications 1 à 9, caractérisé par un étage de circuit (1) imprimant au signal à haute fréquence une variation de phase et un étage de circuit (2), situé en aval de cet étage de circuit (1), abaissant l'amplitude du signal à haute fréquence à obtenir.

11. Circuit selon la revendication 10, caractérisé en ce que l'étage de circuit (1) imprimant au signal à haute fréquence une variation de phase et/ou l'étage de circuit (2) abaissant l'amplitude du signal à haute fréquence est ou sont activé(s) par un signal de cnmmande (6).

12. Circuit selon la revendication 1, caractérisé en ce qu'il est prévu un circuit de temporisation (4) qui est envoyé à l'étage de circuit (1) imprimant une variation de phase au signal à haute fréquence, temporisé d'un temps $\tau$, par rapport au signal de commande (6) qui est envoyé à l'étage de circuit (2) abaissant l'amplitude du signal à haute fréquence.

13. Circuit selon l'une des revendications 10 à 12, caractérisé en ce que l'étage de circuit (2) imprimant une variation de phase au signal à haute fréquence est un organe de rotation de phase.

14. Circuit selon l'une des revendications 10 à 13, caractérisé en ce que l'étage de circuit (2) abaissant l'amplitude du signal à haute fréquence est un modulateur d'amplitude.

15. Circuit selon l'une des revendications 10 à 14, caractérisé en ce qu'un étage de formation d'impulsions (5) pour le signal de commande (6) est situé en amont de l'étage de circuit (2) abaissant l'amplitude du signal

7

à haute fréquence.

Fig.1a

Fig.1b

Fig. 2a

Fig. 2b

Fig. 2c

Fig. 2d

9

_Fig.3_

_Fig.4_

_Fig.5a_

_Fig.5b_

_Fig.5c_

10